# EUROPÄISCHE PATENTSCHRIFT

(11) **EP 3 256 380 B1**
(45) Veröffentlichungstag und Bekanntmachung des Hinweises auf die Patenterteilung: **09.09.2020**
(21) Anmeldenummer: 16706517.6
(22) Anmeldetag: 11.01.2016
(51) Int. Cl.: B63G 8/00, B63G 8/18, B63G 8/22, G01V 1/38

(54) **UNTERWASSERGLEITER, KONTROLLSTATION UND UEBERWACHUNGSSYSTEM, INSBESONDERE TSUNAMI-WARNSYSTEM**
UNDERWATER GLIDER, CONTROL STATION, AND MONITORING SYSTEM, IN PARTICULAR TSUNAMI WARNING SYSTEM
PLANEUR SOUS-MARIN, STATION DE COMMANDE ET SYSTÈME DE SURVEILLANCE, NOTAMMENT SYSTÈME D'ALERTE AU TSUNAMI

(30) Priorität: 10.02.2015 DE 102015101914
(43) Veröffentlichungstag der Anmeldung: 20.12.2017
(73) Patentinhaber: ATLAS ELEKTRONIK GmbH, 28309 Bremen (DE)
(72) Erfinder: BERGER, Stephan, 21423 Winsen / Luhe (DE); BOCHENTIN, Thorsten, 28209 Bremen (DE)
(74) Vertreter: thyssenkrupp Intellectual Property GmbH
(86) Internationale Anmeldenummer: PCT/DE2016/100010
(87) Internationale Veröffentlichungsnummer: WO 2016/127974

(56) Entgegenhaltungen:
- WO-A1-2013/012568
- US-A1- 2009 241 826
- US-A1- 2014 230 714
- US-B1- 6 854 410

## Beschreibung

Die Erfindung betrifft einen Unterwassergleiter zur Aufnahme von ozeanographischen Daten, wobei der Unterwassergleiter eine Kopplungseinheit und ein Nutzlastmodul aufweist. Des Weiteren betrifft die Erfindung eine Kontrollstation und ein Überwachungssystem, insbesondere ein Tsunami-Warnsystem.

Zur Aufnahme von ozeanographischen Daten werden Über- und/oder Unterwasserschiffe, unbemannte Tauchroboter, fest am Meeresgrund installierte Messsonden oder treibende Messsonden (sogenannte Drifter) eingesetzt.

US 2014/0230714 A1 offenbart ein System aus einem autonomen Unterwasserfahrzeug mit einem Antriebsmechanismus und einem externen Nutzlastmodul, welches ablösbar mechanisch mit dem autonomen Unterwasserfahrzeug verbunden ist, wobei das externe Nutzlastmodul selbst keinen Antrieb aufweist.

Nachteilig beim Stand der Technik ist, der hohe Aufwand an Personal und an Über- und/oder Unterwasserschiffen zur direkten Durchführung von Messprogrammen oder zur Installation, Aussetzung und Wartung von Messsonden.

Zudem können Über- und/oder Unterwasserschiffe lediglich eingeschränkt oder gar nicht an schlechtzugängigen Orten, wie beispielsweise in flachen oder felsigen oder stark strömenden Küstengewässern, eingesetzt werden.

Bei festinstallierten Messsonden ist eine Veränderung ihrer Position nur mit hohem personellem und gerätemäßigem Aufwand möglich. Sowohl für festinstallierte und treibende Messsonden als auch bei unbemannten Tauchrobotern müssen Begleitschiffe mit entsprechenden hohen Betriebskosten eingesetzt werden.

Bei Messsonden und unbemannten Tauchrobotern ist aufgrund der Energieversorgung, beispielsweise über Batterien, die Einsatzzeit begrenzt.

Des Weiteren werden treibende Messsonden von der Meeresströmung angetrieben und können folglich nicht gezielt und lokalisiert eingesetzt werden.

Insbesondere besteht bei allen genannten Messeinrichtungen der Nachteil, dass großflächige Langzeitmessungen mit einer dreidimensionalen Datenerfassung nur mit sehr hohem Aufwand und/oder einer hohen Anzahl von Messsonden durchgeführt werden können.

Beim Ausfall von treibenden und festinstallierten Messsonden muss ein Ersatz durch ein Über- und/oder Unterwasserschiffes antransportiert werden. Im Falle eines Tsunamis kann dies problematisch werden, wenn ein entsprechendes Schiff sich nicht bereits im Einsatzgebiet der Messsonde befindet, die Messsonde im betroffenen Küstenabschnitt liegt oder ein Auslaufen eines notwendigen Schiffes aus einem Hafen im Gefahrengebiet nicht möglich ist.

Aufgabe der Erfindung ist es, den Stand der Technik zu verbessern.

Gelöst wird die Aufgabe durch einen Unterwassergleiter zur Aufnahme von ozeanographischen Daten, wobei der Unterwassergleiter eine Kopplungseinheit und ein Nutzlastmodul umfasst, und derart eingerichtet ist, dass eine energiearme Fortbewegung unter Wasser über eine Auftriebsänderung des Unterwassergleiters erfolgt, wobei das Nutzlastmodul über die Kopplungseinheit mit dem Unterwassergleiter verbunden ist, wobei die energiearme Forbewegung unter Wasser und ein Ferntransport über weite Strecken durch den Unterwassergleiter erfolgt, und an einem Einsatzort das Nutzlastmodul entkoppelbar ist, sodass das Nutzlastmodul an dem Einsatzort autonom einsetzbar ist.

Somit ergibt sich der Vorteil von langen autonomen Einsatzzeiten des Unterwassergleiters und des Nutzlastmoduls, da der Ferntransport über weite Strecken energiearm mittels des Unterwassergleiters erfolgt.

Zusätzlich verfügt das Nutzlastmodul über eine separate, autonome Einsatzfähigkeit am Einsatzort. Dadurch kann es insbesondere an schlechtzugängigen Orten, wie flache Küstengewässer, autonom eingesetzt werden.

Weiterhin ist vorteilhaft, dass keine Begleitschiffe notwendig sind, sondern der Unterwassergleiter als Transportmittel für das autonome einsetzbare Nutzlastmodul dient. Somit werden Personal- und Betriebskosten für ein Begleitschiff gespart.

Zusätzlich kann sich der Unterwassergleiter auch selbstständig von einem bestehenden Einsatzgebiet zu einem neuen Einsatzgebiet bewegen und das Nutzlastmodul entsprechend transportieren und umsetzen.

Insbesondere kann der Unterwassergleiter für einen zukünftigen Einsatz des Nutzlastmoduls auch beispielsweise am Meeresgrund positioniert und im Wartezustand vorgehalten werden, wobei dies auch über lange Zeiträume erfolgen kann.

Insbesondere kann die ozeanographische Datenaufnahme sowohl während des Ferntransports durch den Unterwassergleiter als auch am Einsatzort durch das Nutzlastmodul erfolgen. Somit können flexibel eine Vielzahl von Daten aus den Ozeanen erfasst werden. Durch die Fortbewegung über den Unterwassergleiter und die autonome Einsetzbarkeit des Nutzlastmoduls können die Daten an verschiedenen Orten und in verschiedenen Wassertiefen aufgenommen werden.

Ein wesentlicher Gedanke der Erfindung beruht darauf, dass ein Unterwassergleiter über eine Kopplungseinheit mit einem autonomen einsetzbaren Nutzlastmodul gekoppelt ist und im gekoppelten Zustand die Fortbewegung über weite Strecken durch den Unterwassergleiter erfolgt, während am Einsatzort nach der Entkopplung das Nutzlastmodul autonom seine Messaufgaben durchführt.

Somit ist der Unterwassergleiter für die Aufgabe des Ferntransportes und das Nutzlastmodul insbesondere für die ozeanographische Datenaufnahme und den autonomen Einsatz am Einsatzort optimiert.

### Folgendes Begriffliche sei erläutert:

Ein "Unterwassergleiter" ist insbesondere ein unbemannter Tauchroboter, der ähnlich zum Prinzip eines Segelflugzeuges insbesondere bei Erhöhung des Auftriebes zur Wasseroberfläche aufsteigt und diese Auftriebskraft für eine Fortbewegung benutzt, während anschließend eine lange Gleitphase ohne Energieaufwand unter Absinken erfolgt. Die Änderung des Auftriebs des Unterwassergleiters erfolgt insbesondere durch Änderung seiner Dichte. Lediglich bei dem Übergang zwischen Aufstieg und Absinken kann ein Energieverbrauch für die Dichteänderung notwendig werden. Durch einen ständigen Wechsel zwischen Auf- und Abstiegsphasen ergibt sich für den Unterwassergleiter insbesondere ein sägezahnartiges Fortbewegungsprofil. Die Steuerung erfolgt hierbei insbesondere über ein hydrodynamisches Steuerruder oder Gewichtsverlagerung.

Beispielsweise kann ein Unterwassergleiter ein Gewicht von 50kg, eine Länge von 1,5m und einen Durchmesser von 30cm aufweisen. Die Tauchtiefe eines Unterwassergleiters kann insbesondere zwischen einigen hundert Metern bis zu 6.000m betragen, wobei diese insbesondere von der Druckfestigkeit der verwendeten Komponenten abhängt.

Vorteilhaft verwendet ein Unterwassergleiter insbesondere eine große Tauchtiefe, da für die Vorwärtsbewegung selbst kaum Energie benötigt wird, sondern die Energie im Wesentlichen für die Dichteänderung am höchsten und tiefsten Punkt der Tauchtiefe aufgebracht wird. Erreichbare Vorwärtsgeschwindigkeiten liegen insbesondere bei ca. 1km/h.

Unter einer "Kopplungseinheit" wird insbesondere eine Einheit verstanden, welche dem Unterwassergleiter mit dem Nutzlastmodul mechanisch und/oder elektrisch verbindet. Insbesondere ermöglicht die Kopplungseinheit neben der Verbindung den Datenaustausch und gegebenenfalls die gemeinsame, jedoch trennbare Stromversorgung. Die Kopplungseinheit ist insbesondere am Unterwassergleiter und am Nutzlastmodul so ausgestaltet, dass eine stoffbündige Verbindung gegeben ist. Beispielsweise kann die Verbindung über die Kopplungseinheit, beispielsweise mittels Kopplungsadapter durch Einhaken erfolgen, wobei sowohl eine mechanische als auch eine elektrische Verbindung besteht. Auch können beispielweise einrastende Riegel eingesetzt werden und/oder die Kopplung kann unter Druck erfolgen. Auch kann die Kopplungseinheit insbesondere unter Ausnutzung von magnetischen und/oder elektrischen Kräften ausgeführt sein. Die Kopplungseinheit erlaubt insbesondere eine schnelle Verbindung zwischen dem Unterwassergleiter und dem Nutzlastmodul sowie eine schnelle Abkopplung.

Ein "Nutzlastmodul" ist insbesondere ein Modul, welches autonom einsetzbar ist und insbesondere Sensoren und Geräte zur Aufnahme von ozeanographischen Daten sowie andere Einrichtungen enthält. Insbesondere ist das Nutzlastmodul ohne Antrieb betreibbar, wenn es an den Unterwassergleiter gekoppelt ist. Jedoch kann es im entkoppelten Zustand insbesondere autonom eingesetzt werden und sich über einen eigenen Antrieb fortbewegen.

Unter einer "energiearmen Fortbewegung" wird insbesondere eine Fortbewegung des Unterwassergleiters verstanden, welche deutlich weniger Energie verbraucht als konventionelle Antriebe, wie beispielsweise Verbrennungsmotoren, Gasgeneratoren und/oder Elektroantriebe.

Ein "Ferntransport" ist insbesondere ein Transport über eine Strecke von 370km, insbesondere größer 2.000km, bevorzugt größer 8.000km.

Bei einem "Einsatzort" handelt es sich insbesondere um diejenige Lokalität, an welcher insbesondere das Nutzlastmodul autonom eingesetzt wird. Dabei kann es sich insbesondere um ein Küstengewässer oder ein schwerzugänglichen Gewässerabschnitt, beispielsweise mit Felsen oder wechselnden Wassertiefen, handeln.

Unter "autonom" wird insbesondere verstanden, dass das Nutzlastmodul ohne Versorgung von außen sich selbstständig versorgt und betreibt. Insbesondere ist das Nutzlastmodul bezüglich der Energieversorgung und den Betriebsmitteln über eine lange Einsatzzeit nicht von einer Versorgung von außen abhängig. Für den Betrieb und die Navigation kann das Nutzlastmodul jedoch insbesondere Steuerungsbefehle von außen erhalten.

Unter "ozeanographischen Daten" werden insbesondere Messdaten zur physikalischen, chemischen und/oder biologischen Charakterisierung von Ozeanen verstanden. Dabei kann es sich insbesondere um Parameter wie die Leitfähigkeit, die Temperatur, den Druck, die Fluoreszenz, den Chlorophyll-a-Gehalt und/oder beispielsweise die Trübung handeln. Auch kann es sich dabei insbesondere um akustische Messungen, wie Wal-Geräusche, handeln. Die ozeanographischen Daten werden insbesondere mit geeigneten Sonden und Messgeräten aufgenommen. Die Messsonden können insbesondere fest in der Außenhaut des Unterwassergleiters und/oder des Nutzlastmoduls installiert sein oder mobil vom Unterwassergleiter und/oder dem Nutzlastmodul eingesetzt werden, beispielsweise unter Verwendung eines Roboterarms.

In einer weiteren Ausführungsform des Unterwassergleiters weist das Nutzlastmodul einen Antrieb, insbesondere für eine Fortbewegung in Küstengewässern, auf.

Dadurch, dass das Nutzlastmodul einen eigenen Antrieb aufweist, kann es nach der Entkopplung autonom vom Unterwassergleiter eingesetzt werden.

Insbesondere wenn das Nutzlastmodul kleiner als der Unterwassergleiter ist, lässt sich das Nutzlastmodul vorteilhaft in flachen und/oder stark strömenden Küstengewässern oder schwerzugänglichen Orten einsetzen. Auch kann das Nutzlastmodul in potentiellen Gefahrenbereichen wie zum Beispiel in Gebieten mit erhöhter Tsunami-Gefahr eingesetzt werden.

Durch den Antrieb ist das Nutzlastmodul auch steuerbar einsetzbar, sodass es deutliche Vorteile gegenüber treibenden Messsonden aufweist, welche nicht am Einsatzort positioniert werden können.

Der Antrieb des Nutzlastmoduls ist insbesondere für die Fortbewegung in Küstengewässern vorteilhaft, da in diesem ein Unterwassergleiter aufgrund der fehlenden Wassertiefen sich nicht mehr ausreichend fortbewegen kann und der Energieverbrauch aufgrund der ständig notwendigen Änderungen der Dichte ansteigt.

Zudem kann nach der Entkopplung ein Nutzlastmodul zunächst am Gewässergrund beispielsweise "zwischengeparkt" werden und erst zu einem späteren Zeitpunkt zum Beginn der Datenaufnahme aktiviert werden. Somit kann ein Nutzlastmodul auch beispielsweise schlechte Wetterbedingungen in der Nähe des Einsatzortes abwarten. Nachdem sich die Wetterbedingungen beruhigt haben, kann sich das Nutzlastmodul an den vorgegebenen Einsatzort bewegen und mit den Messungen beginnen. Dies ist insbesondere vorteilhaft, wenn beispielsweise die Temperaturschichtung im Meer aufgenommen werden soll.

Ebenso kann ein Nutzlastmodul über seinen Antrieb bei Gefahren, beispielsweise bei Sturm in einem felsenreichen Küstengewässer, sich aus dem Gefahrenbereich bewegen und zu einem günstigeren Zeitpunkt seine Messaufgabe wieder aufnehmen.

Bei einem "Antrieb" handelt es sich um eine konstruktive Einheit, welche mittels Energieumformung eine Maschine, insbesondere einen Motor mit einem zugehörigen Getriebe bewegt. Unter einem Antrieb wird insbesondere auch die nichtmaschinelle Bewegung verstanden, wie diese beispielsweise durch Wind oder strömendes Wasser erzeugt wird. Unter einem Antrieb wird insbesondere ein Gasantrieb, ein Antrieb über Verbrennungsmotoren, Elektroantrieb und/oder Reaktionsantrieb verstanden.

"Küstengewässer" sind insbesondere küstennahe Bereiche des offenen Meers und mit dem offenen Meer in wechselseitiger Verbindung stehende Gewässer, welche an einer oder mehreren Seiten vom Land umschlossen sein können. Als Küstengewässer wird insbesondere auch das Küstenmeer bezeichnet, welches auch Hoheitsgewässer genannt wird. Das Küstenmeer umfasst insbesondere die Zwölf-Seemeilenzone. Unter Küstengewässer kann insbesondere auch die Anschlusszone und die sich anschließende ausschließliche Wirtschaftszone mit bis zu 200 Seemeilen Abstand von einer Basislinie der Küste verstanden werden.

Zur Navigation, Messdatenerfassung und Daten- sowie Steuerbefehlsübertragung weist der Unterwassergleiter und/oder das Nutzlastmodul eine Steuereinheit und/oder Datenerfassungseinheit und/oder einen Sender und/oder einen Empfänger und/oder ein Sonar auf.

Vorteilhaft kann somit die Navigation, Datenerfassung und Datenübertragung sowohl über den Unterwassergleiter als auch über das Nutzlastmodul erfolgen.

Somit ist die Navigation, Datenerfassung und Datenübertragung des Unterwassergleiter und des Nutzlastmoduls im gekoppelten Zustand redundant ausgelegt, kann wahlweise über den Unterwassergleiter oder das Nutzlastmodul erfolgen oder von vornherein nur im Nutzlastmodul vorgesehen sein.

Die wahlweise Nutzung ist insbesondere vorteilhaft, wenn Batterien oder sonstige Spannungsversorgungseinheiten an Bord des Unterwassergleiters und des Nutzlastmoduls unterschiedliche Ladezustände aufweisen.

Somit kann bereits beim Ferntransport über weite Strecken eine großflächige Langzeitmessung mit 3-D Datenerfassung über unterschiedliche Wassertiefen erfolgen.

Aufgrund der energiearmen und somit geräuscharmen Fortbewegung des Unterwassergleiters können insbesondere akustische Messungen durchgeführt werden, ohne dass Störungen durch den Antrieb vorliegen. Dies ist insbesondere für die Messung von Geräuschen von Meereslebewesen und bei seismologischen Messungen vorteilhaft.

Zudem kann der Unterwassergleiter mit dem Nutzlastmodul an die Wasseroberfläche auftauchen und Navigationsdaten, beispielsweise mit Hilfe von GPS, übermitteln und korrigieren. Ebenso können Daten, welche während des Tauchvorgangs gewonnen wurden, per Funk und/oder Satellit an eine Kontrollstation übertragen werden. Des Weiteren können neue Einsatzvorgaben von der Kontrollstation an den Unterwassergleiter und/oder an das Nutzlastmodul übertragen werden.

Bei einer "Steuereinheit" handelt es sich insbesondere um eine Einheit zur Steuerung und/oder Regelung von Maschinen und Geräten an Bord des Unterwassergleiters und/oder des Nutzlastmoduls. Insbesondere kann es sich hierbei um eine Navigationseinheit handeln. Die Navigationseinheit dient insbesondere dazu, den Unterwassergleiter und/oder das Nutzlastmodul zum gewünschten Einsatzort zu steuern. Dies umfasst insbesondere das Feststellen der momentanen Position (Ortsbestimmung) und das Ermitteln der besten Route zum Einsatzort.

Bei einer "Datenerfassungseinheit" handelt es sich insbesondere um eine Einheit, welche Messsonden, Messgeräte und/oder Datenauswertungsgeräte aufweist. Die Datenerfassungseinheit dient insbesondere zum Messen und Aufnehmen der oben beschriebenen ozeanographischen Daten. Hierbei kann es sich insbesondere um quantitative als auch qualitative Daten handeln. Ebenso kann es sich hierbei um Kurzzeit- und/oder Langzeitmessungen handeln.

Ein "Sender" ist insbesondere eine Anlage, welche Signale in elektromagnetische Wellen umwandelt und in dieser Form abstrahlt. Hierbei kann eine Antenne insbesondere als technische Vorrichtung zum Senden und/oder Empfangen von elektromagnetischen Wellen verwendet werden. Ebenso kann es sich hierbei um einen akustischen Sender handeln, welcher eine elektrische Spannung entsprechend des Schalldrucks in Wasserschall umwandelt.

Ein "Empfänger" ist insbesondere eine Anlage, die elektromagnetische Wellen aufnimmt und in ein Signal umwandelt. Insbesondere kann es sich bei einem Empfänger um ein Hydrophon handeln, welches ein Gerät zur Wandlung von Wasserschall in eine dem Schalldruck entsprechende elektrische Spannung darstellt. Hierzu nutzen Hydrophone insbesondere einen Frequenzbereich von ca. 10 Hz bis 1 MHz. Neben der Funktion als Empfänger können Hydrophone insbesondere auch als Unterwasserschallquelle genutzt werden.

Unter "Sonar" wird insbesondere ein System zur Ortung von Gegenständen im Raum und Unterwasser mittels ausgesandter und/oder empfangener Schallimpulse verstanden. Dabei kann es sich um ein aktives Sonar handeln, welches selbst ein Signal ausstrahlt oder um ein passives Sonar, welches ausgestrahlte Schallimpulse empfängt. Ebenso kann es sich hierbei um ein bi- oder multistatisches Sonar handeln, welches gleichzeitig auf verschiedenen Plattformen senden und empfangen kann.

In einer weiteren Ausführungsform ist der Unterwassergleiter derart eingerichtet, dass die energiearme Fortbewegung unter Wasser über eine Auftriebsänderung des Unterwassergleiters erfolgt.

Durch die Auftriebsänderung wird eine energiearme Fortbewegung des Unterwassergleiters insbesondere über weite Strecken ermöglicht.

Durch eine kurze energiekonsumierende Dichteänderung am höchsten oder tiefsten Punkt der Tauchtiefe schließt sich anschließend eine lange Gleitphase ohne Energieaufwand an.

Der statische Auftrieb des Unterwassergleiters wird insbesondere über die Änderung der Dichte eingestellt. Nach einer Aufstiegsphase an die Wasseroberfläche, erhöht der Unterwassergleiter seine Dichte und beginnt dadurch zu sinken. An der vorgesehenen tiefsten Tauchtiefe wiederum verringert der Unterwassergleiter seine Dichte und steigt wieder zur Wasseroberfläche.

Die Dichteänderung kann beispielweise über Hydraulikpumpen erfolgen, welche einen Öl-Vorrat zwischen zwei flexiblen Schwingblasen hin- und herpumpen, wobei eine Schwingblase außerhalb und die zweite innerhalb des Druckkörpers des Unterwassergleiters angeordnet sind.

Auch kann die Temperaturschichtung der Meere zur Dichteänderung und somit Auftriebsänderung des Unterwassergleiters ausgenutzt werden. Hierzu können beispielsweise Paraffine eingesetzt werden, welche in tiefen, kalten Meeresschichten erstarren und in den oberen, warmen Meeresschichten wieder schmelzen. Die große Volumenänderung beim Phasenübergang von fest zu flüssig treibt hier die Auftriebsänderung an. Voraussetzung hierfür ist insbesondere, dass ein großer Temperaturgradient zwischen der Wasseroberfläche und der tiefsten Tauchtiefe vorliegt.

Durch die Realisierung der energiearmen Fortbewegung unter Wasser mittels der Auftriebsänderung entfallen Motoren, sodass aufgrund des geräuscharmen Antriebs insbesondere akustische Messungen mit einem Empfänger und/oder seismologische Untersuchungen mit einem Sender möglich sind.

Zudem kann über die Dichteänderung und somit die Auftriebsänderung auch kurzfristig die vertikale Position des Unterwassergleiters mit dem gekoppelten Nutzlastmodul eingestellt werden. Dies ist insbesondere vorteilhaft, wenn aufgrund von schwierigen Wetterbedingungen die Gefahr der Beschädigung des Unterwassergleiters und/oder des Nutzlastmoduls besteht. In diesem Fall kann der Unterwassergleiter mit dem Nutzlastmodul in tiefere, ruhigere Wasserschichten abtauchen.

Durch den ständigen Wechsel zwischen Auf- und Abstiegsphasen und dadurch den sägezahnartigen Fortbewegungsprofil können vorteilhaft großflächige Langzeitmessungen mit einer dreidimensionalen Datenerfassung über weite Strecken realisiert werden.

Unter "Auftriebsänderung" wird insbesondere die Änderung des statischen Auftriebs verstanden, welche durch die Verdrängung des umgebenen Wassers hervorgerufen wird. Der Auftrieb ist insbesondere eine der Schwerkraft entgegengesetzte Kraft auf den Unterwassergleiter und/oder den Nutzlastmodul im Wasser.

Um aus der Vertikalbewegung des Unterwassergleiters eine Antriebskraft für die Vorwärtsbewegung des Unterwassergleiters zu erzeugen, weist der Unterwassergleiter einen schwenkbaren Flügel oder mehrere schwenkbare Flügel auf.

Dadurch kann die horizontale Bewegung des Unterwassergleiters und/oder die Länge der Aufstiegs- und/oder Abstiegsphase eingestellt werden.

Zudem kann der Unterwassergleiter dadurch leichter gesteuert und/oder navigiert werden. Somit ist es möglich, das Nutzlastmodul auf dem kürzesten und/oder schnellsten Wege an den Einsatzort zu verbringen.

In einer weiteren Ausführungsform weist der Unterwassergleiter und/oder das Nutzlastmodul eine Batterie und/oder eine Solarzelle auf.

Dadurch kann eine Spannungsversorgung von Datenerfassungsgeräten und Messsonden, Navigationseinheit und weiteren Geräten an Bord des Unterwassergleiters und/oder des Nutzlastmoduls erfolgen.

Vorteilhafterweise weist der Unterwassergleiter beispielsweise auf der oberen Heckflosse oder dem oberen Gehäuseteil eine oder mehrere Solarzellen auf, sodass beim Auftauchen über die Solarzelle Spannung zur Versorgung von elektrischen Einheiten an Bord gewonnen werden kann. Dadurch kann die Einsatzphase des Unterwassergleiters verlängert werden, indem Energie an Bord gewonnen wird.

Zudem können die Batterien zu einer späteren Versorgung von elektrischen Einheiten aufgeladen werden. Ebenso kann über die Solarzelle auch die Batterie des Nutzlastmoduls aufgeladen werden, wenn der Unterwassergleiter und das Nutzlastmodul über die Kopplungseinheit elektrisch verbunden sind.

Vorteilhaft ist es, wenn sowohl der Unterwassergleiter als auch das Nutzlastmodul eigene Batterien zur elektrischen Versorgung aufweisen, sodass die Einsatzzeit verlängert werden kann.

Unter "Batterien" wird insbesondere eine Zusammenschaltung mehrerer gleichartiger, galvanischer Zellen und/oder Elemente verstanden. Hierbei kann es sich insbesondere um nicht wiederaufladbare sogenannte Primärzellen und/oder um wiederaufladbare Akkumulatoren (sogenannte Sekundärzellen) handeln.

Bei einer "Solarzelle" (oder photovoltaische Zelle) handelt es sich insbesondere um ein elektrisches Bauteil, welches kurzwellige Strahlungsenergie, insbesondere Sonnenlicht, direkt in elektrische Energie umwandelt. Insbesondere ist die Solarzelle so am Unterwassergleiter und/oder am Nutzlastmodul angebaut, dass diese beim Auftauchen vom Sonnenlicht direkt bestrahlt wird.

Zur Selbstzerstörung des Nutzlastmoduls insbesondere im Gefahrenfall kann das Nutzlastmodul eine Sprengeinheit, insbesondere eine Sprengeinheit zur Selbstzerstörung, aufweisen.

Durch eine Sprengeinheit zur Selbstzerstörung kann das Nutzlastmodul zerstört werden, insbesondere wenn dieses sich nicht mehr über eine Kontrollstation steuern lässt, beispielsweise aufgrund eines Funktionsausfalls, und den Schiffsverkehr gefährden würde. Durch eine Selbstzerstörung des Nutzlastmoduls entfällt eine aufwändige Bergung.

Vorteilhaft kann das Nutzlastmodul vor der Selbstzerstörung vom Unterwassergleiter entkoppelt werden. Insbesondere wenn eine Spannungsversorgung der Hydraulikpumpen zur Dichteänderungen nicht mehr möglich ist, beispielsweise weil die Batterien nicht mehr aufladbar sind, kann der entkoppelte Unterwassergleiter daraufhin geflutet werden. Dadurch sinkt dieser auf den Meeresgrund ab und stellt keine direkte Gefährdung für den Schiffsverkehr dar.

Alternativ kann der Unterwassergleiter bei noch bestehender Funktionsfähigkeit zu einer Kontrollstation zurückkehren oder direkt ein anderes Nutzlastmodul ankoppeln.

Die Selbstzerstörung des Nutzlastmoduls und/oder die Flutung des Unterwassergleiters sind vorteilhaft, da diese relativ kostengünstig im Vergleich zu einem Einsatz eines Überwasserschiffes zur Bergung sind.

In einem weiteren Aspekt der Erfindung wird die Aufgabe gelöst durch eine Kontrollstation, welcher ein Unterwassergleiter wie zuvor beschrieben zugeordnet ist.

Dadurch kann über die Kontrollstation zum einen der Empfang der Messdaten und der Positionsdaten des Unterwassergleiters und/oder des Nutzlastmoduls realisiert werden. Zum anderen kann die Kontrollstation Vorgaben zu den Messaufgaben und zur Navigation des Unterwassergleiters und/oder des Nutzlastmoduls vorgeben.

Insbesondere ist es vorteilhaft, wenn die Kontrollstation mehrere Unterwassergleiter in einem Einsatzgebiet kontrolliert und steuert. Dadurch können je nach Positionen der mehreren Unterwassergleiter derjenige Unterwassergleiter eingesetzt werden, welcher sich in nächster Nähe zum Einsatzort befindet.

Dies ist insbesondere vorteilhaft, wenn ein Unterwassergleiter zur Gefahrenabwehr eingesetzt wird und schnell am Einsatzort sein muss, um dort Messaufgaben und/oder präventive Aufgaben zu erfüllen.

Aufgrund des relativ kostengünstigen Einsatzes, können dadurch auch mehrere Unterwassergleiter quasi in Warteposition in einem Einsatzgebiet positioniert und im Bedarfsfall über die Kontrollstation aktiviert werden. Durch den relativ geringen Energieverbrauch des Unterwassergleiters mit dem Nutzlastmodul können somit auch lange Wartezeiten von mehreren Monaten bis zum Einsatz realisiert werden.

Des Weiteren können auch Unterwassergleiter mit unterschiedlichen Nutzlastmodulen für unterschiedliche Aufgaben vorgehalten werden.

Vorteilhaft haben die Unterwassergleiter, welche einer Kontrollstation zugeordnet sind, baugleiche Kopplungseinheiten, sodass die Nutzlastmodule auch zwischen den Unterwassergleitern ausgetauscht werden können, wodurch sich eine optimale Einsatzmöglichkeit entsprechend des Mess- und Aufgabenbedarfes ergibt.

Zudem wird dadurch ermöglicht, dass ein Unterwassergleiter ein Nutzlastmodul am Meeresboden ablegt, welches dann später von einem anderen Unterwassergleiter angekoppelt und ferntransportiert wird. Dadurch wird eine sehr flexible Einsatzmöglichkeit der Unterwassergleiter und der Nutzlastmodule ermöglicht.

Somit kann ein entkoppeltes Nutzlastmodul auch zu einer stationären Langzeitmessung am Meeresgrund verwendet werden. Anschließend kann das Nutzlastmodul von einem Unterwassergleiter abgeholt werden und/oder durch eine Auftriebseinheit, beispielsweise einen Auftriebsballon, an die Wasseroberfläche aufsteigen und dort von einem Unterwassergleiter angekoppelt werden und/oder konventionell durch ein Überwasserschiff geborgen werden.

Unter einer "Kontrollstation" wird insbesondere eine zentrale Station verstanden, welche den Einsatz von einem Unterwassergleiter oder mehreren Unterwassergleitern kontrolliert und koordiniert, wobei insbesondere die Kontrollstation eine Korrektur der Navigation des Unterwassergleiters und/oder des Nutzlastmoduls sowie die Einsatz- und Steuerbefehle an den Unterwassergleiter und/oder das Nutzlastmodul überträgt. Zudem werden insbesondere die Daten der Unterwassergleiter zur Kontrollstation übertragen und dort weiterverarbeitet und ausgewertet.

In einem zusätzlichen Aspekt der Erfindung wird die Aufgabe gelöst durch ein Überwachungssystem, insbesondere ein Tsunami-Warnsystem mit mindestens einem Unterwassergleiter wie zuvor beschrieben oder einer Kontrollstation wie zuvor beschrieben.

Dadurch kann bei Ausfall einer festinstallierten Messsonde zur Tsunami-Überwachung der Unterwassergleiter ein Nutzlastmodul mit Messeinheiten zur Stelle der defekten Messsonde bringen und dort absetzen. Das Nutzlastmodul kann dann das ausgefallene Messgerät ersetzen, sodass das Tsunami-Überwachungssystem schnell wieder einsatzfähig ist.

Dadurch ist kein Über- oder Unterwasserschiff zur Wartung oder Ersatz einer Messsonde notwendig, welches je nach Verfügbarkeit der Ersatzsonde eine lange Anfahrzeit benötigt oder aufgrund einer Tsunamigefahr einen Hafen im betroffenen Küstenbereich gar nicht verlassen kann.

Auch können anstelle der komplexen und aufwendigen Verbringung von stationären Messsonden auf dem Meeresgrund, um seismographische Veränderungen wie Erdbeben oder Hangabrutsche zu erkennen, mehrere Unterwassergleiter zur Datenerfassung in einem bekannten Gefahrengebiet, insbesondere zur Tsunamiüberwachung, positioniert werden.

Es ist vorteilhaft, wenn mehrere Unterwassergleiter sich bereits im Überwachungsgebiet befinden und bei den ersten verdachtserregenden Messwerten durch ein Erdbeben oder eine sonstige Erschütterung gezielt sich an den Ort der höchsten Intensität bewegen können. Dies hat den Vorteil gegenüber stationären Messsonden, dass nicht eine Vielzahl von Messsonden festinstalliert werden müssen, sondern die Unterwassergleiter sich mit den Nutzlastmodulen flexibel an den Ort des Geschehens bewegen und ein dem Ereignis entsprechendes Messnetz aufbauen können.

Dadurch, dass die seismologischen Veränderungen über das zentrale Überwachungssystem erfasst werden, ist eine schnelle Beurteilung der Gesamtsituation im Einsatzgebiet möglich und die Bevölkerung kann im Notfall spezifisch und schnell gewarnt werden.

Zudem besteht nicht die Gefahr, dass stationäre Messsonden am falschen Ort fest installiert sind, sondern die Unterwassergleiter mit Nutzlastmodulen können gezielt in das Gebiet oder in die Nähe des Gebietes der erhöhten seismologischen Aktivität in kürzester Zeit gebracht werden.

Allgemein erfolgt das Verfahren zur Aufnahme von ozeanographischen Daten mit einem Unterwassergleiter und/oder einem Nutzlastmodul wie zuvor beschrieben und/oder einer Kontrollstation wie zuvor beschrieben nach einem oder mehreren der folgenden Schritte:
- Zum Ferntransport transportiert ein zuvor beschriebener Unterwassergleiter ein zuvor beschriebenes Nutzlastmodul in ein Einsatzgebiet.
- In dem Einsatzgebiet wird das Nutzlastmodul über eine Kopplungseinheit von dem Unterwassergleiter getrennt.
- Nach einer Kopplung wird der Unterwassergleiter geflutet und sinkt auf den Meeresgrund.
- Über einen elektrischen Antrieb bewegt sich das Nutzlastmodul zu einem Einsatzort.
- An dem Einsatzort nimmt das Nutzlastmodul über mindestens eine Datenerfassungseinheit Daten auf und/oder führt mindestens einen Steuerbefehl der Kontrollstation aus.
- Das Nutzlastmodul überträgt Daten zu der Kontrollstation.
- Nach Ende der Messdatenerfassung und vollständiger Entladung der Batterien an Bord zerstört sich das Nutzlastmodul selbst.

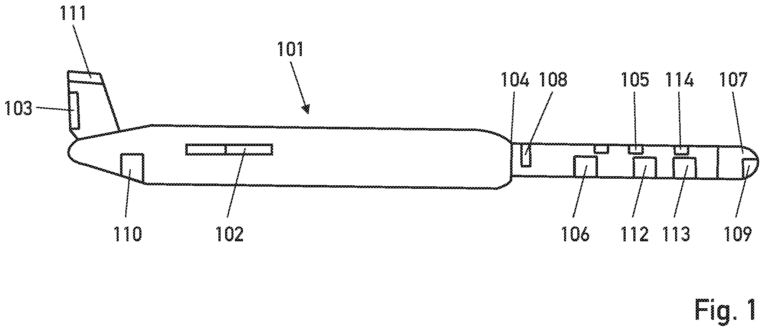

Im Weiteren wird die Erfindung anhand von Ausführungsbeispielen erläutert. Es zeigen
- Figur 1: eine schematische Darstellung eines Unterwassergleiters, welcher über eine Kopplungseinheit mit einem Nutzlastmodul verbunden ist und

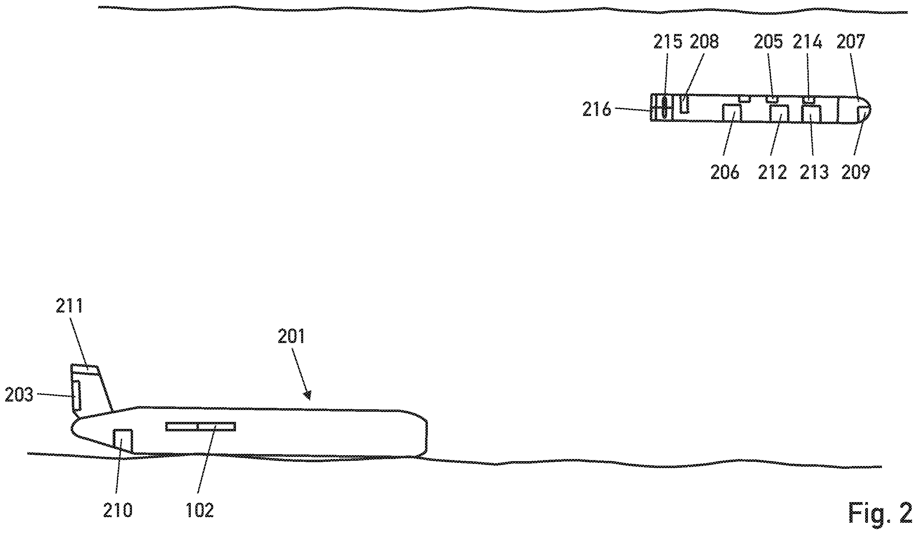

- Figur 2: eine schematische Darstellung eines abgekoppelten Unterwassergleiters, welcher geflutet am Meeresboden liegt, und ein Nutzlastmodul mit eigenem Antrieb unterhalb der Wasseroberfläche.

Ein Unterwassergleiter 101 ist über einen Kopplungsadapter 104 mit einer Messstation 105 mechanisch und elektrisch verbunden. Der Unterwassergleiter 101 weist am Heck ein Seitenruder 103 und auf der Oberseite des Hecks eine Solarzelle 111 auf. Auf beiden Seiten des Unterwassergleiters 101 sind verstellbare Flügel 102 angeordnet. Die Solarzelle 111 ist mit einer Batterie 110 elektrisch verbunden (nicht dargestellt).

Die Messstation 105 weist im Bug eine Navigationseinheit 107 und ein Sonar 109 auf. Des Weiteren weist die Messstation 105 eine eingezogene Antenne 108, einen elektrischen Antrieb 106 mit einem Elektromotor und einer Regelung, eine Batterie 112 und eine Selbstzerstörungseinheit 113 auf. Die Messstation 105 hat drei Messgeräte 114 zur Messung von Chlorophyll-a, Temperatur und Leitfähigkeit, wobei die zugehörigen Messsonden direkt in der Außenhaut der Messstation 105 fest eingebaut sind (nicht gezeigt).

Der Unterwassergleiter 101 mit angekoppelter Messstation 105 wird in Bremerhaven ins Wasser gelassen. Über eine Kontrollstation (nicht dargestellt) wird die Routenvorgabe an die Navigationseinheit 107 übermittelt. Das Ziel des Unterwassergleiters 101 mit gekoppelter Messstation 105 sind die Azoren, wobei die Navigationseinheit 107 der Messstation 105 die Steuerung für diese Überfahrt durchführt.

Der Unterwassergleiter 101 dient als Träger- und Transportsystem für die Messstation 105. Der energiearme Ferntransport bis zu den Azoren wird durch eine Dichteänderung des Unterwassergleiters 101 bewirkt. Dazu weist der Unterwassergleiter 101 eine äußere und eine innere Schwimmblase (nicht dargestellt) auf.

Der Unterwassergleiter 101 mit gekoppelter Messstation 105 befindet sich zwei Meter unter der Wasseroberfläche. Für den Abstieg und die dafür notwendige Auftriebsänderung wird Öl von der äußeren Schwimmblase zur inneren Schwimmblase mit Hilfe einer Hydraulikpumpe (nicht dargestellt) gepumpt. Dadurch wird die Dichte des Unterwassergleiters erhöht und dieser beginnt abzusinken. Die beidseitig verstellbaren Flügel 102 erzeugen aus dieser Vertikalbewegung eine Antriebskraft für die Vorwärtsbewegung. Über das Seitenruder 103 wird die seitliche Richtung eingestellt.

Der Unterwassergleiter 101 mit gekoppelter Messstation 105 sinkt 1.000m ab, wobei dieser eine Vorwärtsbewegung von 1km/h erzielt. In 1.002m Tiefe beginnt die Hydraulikpumpe, welche von der Batterie 110 versorgt wird, Öl von der inneren Schwimmblase zur äußeren Schwimmblase zu pumpen. Dadurch nimmt die Dichte ab und der Unterwassergleiter 101 mit gekoppelter Messstation 105 beginnt aufzusteigen. Diese Ab- und Aufstiegsphasen wiederholen sich durch die Dichteänderung aufgrund des Umpumpens des Öls.

Während der Überfahrt zu den Azoren, messen die Messgeräte 114 kontinuierlich die Parameter Chlorophyll a, Temperatur und Leitfähigkeit.

Alle 6 Stunden taucht der Unterwassergleiter 101 mit gekoppelter Messstation 105 komplett aus dem Wasser auf und überträgt über die ausgefahrenen Antenne 108 seine aktuelle Position und die aufgenommenen Messdaten der Messgeräte 114 an die nicht gezeigte Kontrollstation. Die Kontrollstation gibt, sofern erforderlich, eine Kurskorrektur vor.

Der Unterwassergleiter 101 mit gekoppelter Messstation 105 bleibt 20 Minuten oberhalb der Wasseroberfläche, sodass über die Solarzelle 111 Energie gewonnen wird, welche je nach Ladezustand in der Batterie 110 des Unterwassergleiters 101 und auch in der Batterie 112 der Messstation 105 gespeichert wird.

Nach 134 Tagen hat der Unterwassergleiter 101 mit gekoppelter Messstation 105 die Azoren erreicht. Im Einsatzgebiet der Messstation 105 wird der Unterwassergleiter 101 von der Messstation 105 über den Kopplungsadapter 104 abgekoppelt. Durch die Abkopplung wird gleichzeitig die Batterie 212 der Messstation 205 aktiviert. Die Batterie 212 versorgt sowohl die Messgeräte 214 als auch den elektrischen Antrieb 206 und die Navigationseinheit 207 inklusive Sonar 209.

Somit ist die Messstation 205 nun autonom betrieben und wird von der nicht gezeigten Kontrollstation gesteuert. Der elektrische Antrieb 206 bewirkt über eine Welle eine Drehung des Propeller 215 und somit für eine Fortbewegung. Über das Ruder 216 wird die Seitenbewegung gesteuert.

Der abgekoppelte Unterwassergleiter 202 wird automatisch durch die Abkopplung geflutet und sinkt an den Meeresgrund, sodass er keine Gefährdung für den Schiffsverkehr darstellt.

Die Messstation 205 fährt die vorgegebene Route im Messgebiet der Azoren für 10 Tage ab und übermittelt in regelmäßigen Abständen durch Auftauchen an die Wasseroberfläche und Ausfahren der Antenne 208 die Messdaten an die Kontrollstation.

Nach Abschluss des Messprogrammes zerstört sich die Messstation 205 über die Zerstörungseinheit 213 selbst und die verbleibenden Teile sinken auf den Meeresgrund ab, wo diese keine Gefährdung für den Schiffverkehr darstellen.

### Bezugszeichenliste

- 101: Unterwassergleiter
- 102: verstellbare Flügel
- 103: Seitenruder
- 104: Kopplungsadapter
- 105: Messstation
- 106: elektrischer Antrieb
- 107: Navigationseinheit
- 108: Antenne
- 109: Sonar
- 110: Batterie
- 111: Solarzelle
- 112: Batterie
- 113: Selbstzerstörungseinheit
- 114: Messgeräte
- 201: Unterwassergleiter
- 202: Flügel
- 203: Seitenruder
- 204: Kopplungsadapter
- 205: Messstation
- 206: elektrischer Antrieb
- 207: Navigationseinheit
- 208: Antenne
- 209: Sonar
- 210: Batterie
- 211: Solarzelle
- 212: Batterie
- 213: Zerstörungseinheit
- 214: Messgeräte
- 215: Propeller
- 216: Ruder

## Patentansprüche

1. Unterwassergleiter (101, 201) zur Aufnahme von ozeanographischen Daten, wobei der Unterwassergleiter eine Kopplungseinheit (104, 204) und ein Nutzlastmodul (105, 205) umfasst und derart eingerichtet ist, dass eine energiearme Fortbewegung unter Wasser über eine Auftriebsänderung des Unterwassergleiters erfolgt, wobei das Nutzlastmodul über die Kopplungseinheit mit dem Unterwassergleiter verbunden ist, wobei die energiearme Fortbewegung unter Wasser und ein Ferntransport über weite Strecken durch den Unterwassergleiter erfolgt, und an einem Einsatzort das Nutzlastmodul entkoppelbar ist, sodass das Nutzlastmodul an dem Einsatzort autonom einsetzbar ist.

2. Unterwassergleiter nach Anspruch 1, wobei das Nutzlastmodul einen Antrieb (106, 206), insbesondere für eine Fortbewegung in Küstengewässern, aufweist.

3. Unterwassergleiter nach einem der vorherigen Ansprüche, wobei der Unterwassergleiter und/oder das Nutzlastmodul eine Steuereinheit (107, 207) und/oder Datenerfassungseinheit (114, 214) und/oder einen Sender (108, 208) und/oder einen Empfänger (108, 208) und/oder einen Sonar (109, 209) aufweist.

4. Unterwassergleiter nach einem der vorherigen Ansprüche, wobei der Unterwassergleiter einen schwenkbaren Flügel oder mehrere schwenkbare Flügel (102, 202) aufweist.

5. Unterwassergleiter nach einem der vorherigen Ansprüche, wobei der Unterwassergleiter und/oder das Nutzlastmodul eine Batterie (110, 112, 210, 212) und/oder eine Solarzelle (111, 211) aufweist.

6. Unterwassergleiter nach einem der vorherigen Ansprüche, wobei das Nutzlastmodul eine Sprengeinheit, insbesondere eine Sprengeinheit zur Selbstzerstörung (113, 213), aufweist.

7. Kontrollstation, wobei der Kontrollstation ein Unterwassergleiter nach einem der Ansprüche 1 bis 6 zugeordnet ist.

8. Überwachungssystem, insbesondere ein Tsunami-Warnsystem, welches mindestens einen Unterwassergleiter nach einem der Ansprüche 1 bis 6 oder eine Kontrollstation nach Anspruch 7 umfasst.

## Claims

1. Underwater glider (101, 201) for capturing oceanographic data, wherein the underwater glider comprises a coupling unit (104, 204) and a payload module (105, 205) and is designed in such a way that low-energy propulsion under water takes place by varying the buoyancy of the underwater glider, wherein the payload module is connected to the underwater glider by means of the coupling unit, wherein the low-energy propulsion under water and long-haul transportation over long distances are performed by the underwater glider, and the payload module can be uncoupled at a place of use, so that the payload module can be used autonomously at the place of use.

2. Underwater glider according to Claim 1, wherein the payload module has a drive (106, 206), in particular for propulsion in coastal waters.

3. Underwater glider according to one of the preceding claims, wherein the underwater glider and/or the payload module has a control unit (107, 207) and/or data acquisition unit (114, 214) and/or a transmitter (108, 208) and/or a receiver (108, 208) and/or a sonar (109, 209).

4. Underwater glider according to one of the preceding claims, wherein the underwater glider has a pivotable wing or a number of pivotable wings (102, 202).

5. Underwater glider according to one of the preceding claims, wherein the underwater glider and/or the payload module has a battery (110, 112, 210, 212) and/or a solar cell (111, 211).

6. Underwater glider according to one of the preceding claims, wherein the payload module has an explosive device, in particular an explosive device for self-destruction (113, 213).

7. Control station, wherein the control station is assigned an underwater glider according to one of Claims 1 to 6.

8. Monitoring system, in particular a tsunami warning system, which comprises at least one underwater glider according to one of Claims 1 to 6 or a control station according to Claim 7.

## Revendications

1. Planeur sous-marin (101, 201) destiné à acquérir des données océanographiques, le planeur sous-marin comprenant une unité d'accouplement {104, 204) et un module de charge utile (105, 205) et étant conçu de manière à effectuer un déplacement à faible énergie sous l'eau par le biais d'un changement de portance du planeur sous-marin,
le module de charge utile étant relié au planeur sous-marin par le biais de l'unité d'accouplement, le déplacement à faible énergie sous l'eau et le transport longue distance étant effectués sur de grands trajets par le planeur sous-marin, et le module de charge utile pouvant être désaccouplé sur un site d'utilisation de sorte que le module de charge utile puisse être utilisé de manière autonome sur le site d'utilisation.

2. Planeur sous-marin selon la revendication 1, le module de charge utile comportant un entraînement (106, 206), destiné notamment au déplacement dans les eaux côtières.

3. Planeur sous-marin selon l'une des revendications précédentes, le planeur sous-marin et/ou le module de charge utile comportant une unité de commande (107, 207) et/ou une unité d'acquisition de données (114, 214) et/ou un émetteur (108, 208) et/ou un récepteur (108, 208) et/ou un sonar (109, 209).

4. Planeur sous-marin selon l'une des revendications précédentes, le planeur sous-marin comportant une aile pivotante ou une pluralité d'ailes pivotantes (102, 202) .

5. Planeur sous-marin selon l'une des revendications précédentes, le planeur sous-marin et/ou le module de charge utile comportant une batterie {110, 112, 210, 212) et/ou une cellule solaire (111, 211).

6. Planeur sous-marin selon l'une des revendications précédentes, le module de charge utile comportant une unité explosive, notamment une unité explosive destinée à l'autodestruction (113, 213).

7. Station de commande, la station de commande étant associée à un planeur sous-marin selon l'une des revendications 1 à 6.

8. Système de surveillance, en particulier système d'alerte aux tsunamis, lequel comprend au moins un planeur sous-marin selon l'une des revendications 1 à 6 ou une station de commande selon la revendication 7.
